# EUROPÄISCHE PATENTSCHRIFT

(11) **EP 1 262 640 B1**
(45) Veröffentlichungstag und Bekanntmachung des Hinweises auf die Patenterteilung: **03.03.2004**
(21) Anmeldenummer: 02006845.8
(22) Anmeldetag: 26.03.2002
(51) Int. Cl.: F01N 1/08, F01N 7/02, F01N 3/023, B01D 49/02, B03C 3/017, B03C 3/45, F01N 3/033, F01N 3/035, B01D 53/94, F01N 3/02

(54) **Abgasstrang einer Brennkraftmaschine, insbesondere Dieselmotor eines Nutzfahrzeuges wie Lastkraftwagen oder Omnibus, mit integrierten Abgasnachbehandlungs- und Schalldämpfungsvorrichtungen**
Exhaust line of an internal engine, especially diesel engine from utility vehicules such as trucks or buses, with an integrated device for treating an exhaust gas an attenuate noise
Ligne d'échappement d'un moteur à combustion interne, plus particulièrement d'un moteur diesel d'un véhicule utilitaire tel qu'un poids lourd ou un bus, comportant un dispositif de traitement des gaz d'échappement et d'insonorisation intégré

(30) Priorität: 14.05.2001 DE 10123358
(43) Veröffentlichungstag der Anmeldung: 04.12.2002
(73) Patentinhaber: MAN Nutzfahrzeuge Aktiengesellschaft, 80976 München (DE); ROTH-TECHNIK AUSTRIA Gesellschaft m.b.H., 3193 St. Aegyd/Neuwalde (AT)
(72) Erfinder: Jacob, Eberhard, Dr., 82152 Krailling (DE); Mai, Hans-Peter, 76456 Kuppenheim (DE)

(56) Entgegenhaltungen:
- EP-A- 0 484 925
- WO-A-92/18226
- DE-A- 19 934 932
- US-A- 6 038 854

## Beschreibung

Die Erfindung betrifft einen Abgasstrang einer Brennkraftmaschine, insbesondere Dieselmotor eines Nutzfahrzeuges wie Lastkraftwagen oder Omnibus, mit integrierten Abgasnachbehandlungs- und Schalldämpfungsvorrichtungen.

In Verbindung mit Dieselmotoren sind bislang verschiedene Methoden zur Abgasnachbehandlung bekannt geworden. Eine Methode ist das Ausfiltem von Rußpartikeln aus dem Abgas mittels eines Partikelfilters. Dieser setzt sich jedoch mit zunehmender Betriebsdauer in zunehmendem Maße zu, was den Abgasgegendruck erhöht und ein Absinken der Leistung sowie des Wirkungsgrades des Dieselmotors bewirkt. Um dieses zu vermeiden, ist der Partikelfilter bei einem bestimmten Beladungsgrad zu regenerieren. Hierfür sind schon die verschiedensten Vorrichtungen vorgeschlagen worden, denen aber allen der Nachteil anhaftet, dass sie relativ bau- und kostenaufwendig sind. Um ein selbstständiges Abbrennen bzw. eine selbstständige Oxidation des im Partikelfilter gesammelten Rußes zu ermöglichen, ist einerseits eine vergleichsweise hohe Abgastemperatur größer 350°C und andererseits ein mit NO₂ angereichertes Abgas erforderlich. Eine Methode und eine entsprechende Vorrichtung - CRT (continuously regenerating trap) genannt - sind beispielsweise aus der US-PS 4,902,487 bekannt. Dabei ist einem Partikelfilter ein Oxidationskatalysator vorgeschaltet, mit dem das Abgas mit NO₂ anreicherbar ist, das den Partikelabbrand begünstigt. Dieses bekannte Verfahren funktioniert aber dann nicht einwandfrei, wenn das Abgas nicht die erforderliche Abbrandtemperatur erreicht, was in verschiedenen Einsatzfällen, z. B. in Stadtlinienbussen oder Verteilerfahrzeugen mit Stop- and Go-Betrieb der Fall ist. Außerdem sind herkömmliche Partikelfilter nicht in der Lage, alle Feinstpartikel, wie sie durch Hochdruckeinspritzung mit Common-Rail-Systemen entstehen, abzuscheiden, d. h. ein Teil der Feinstpartikel passiert den Partikelfilter. Diesem Problem ist mittlerweile aber auch schon abhelfbar, denn aus der DE 199 34 932 A1 sind schon ein Verfahren und eine Vorrichtung zur filterlosen Abscheidung und Oxidation von Feinstpartikeln aus dem Abgas von Brennkraftmaschinen bekannt, die gegenüber herkömmlichen CRT-Systemen wesentlich effektiver sind. Dabei kommen als Verfahren zur Feinstpartikelabscheidung die Thermophorese an gekühlten Oberflächen und/oder Konvektion mittels strukturierter Oberflächen oder Diffusion in Strömungstotzonen bzw. Abscheidung in eng sowie speziell gestalteten Strömungskanälen zur Anwendung. Vorgeschaltet ist diesem Feinstpartikelabscheider ein Oxidationskatalysator, der dazu dient, den NO₂-Anteil im Stickoxid des Abgases signifikant zu erhöhen. In Verbindung mit innermotorischen und/oder regelungstechnischen Maßnahmen, die zum Erhalt von Abgas mit einer für eine Oxidation der im Partikelabscheider abgeschiedenen Partikeln ausreichenden Temperatur dienen, ist ein einwandfreies Arbeiten dieses Abgasnachbehandlungssystems zu erwarten.

Diesen bekannten filterbehafteten und filterlosen Systemen ist in Serienfahrzeugen ein voluminöser Schalldämpfer nachzuordnen, mit dem sichergestellt wird, dass die vom Gesetzgeber vorgeschriebenen Lärmemissionswerte eingehalten bzw. unterschritten werden. Diese Baugruppen beanspruchen einen vergleichsweise hohen Bauraum, was ihre Unterbringung z. B. in bestimmten Fahrzeugtypen äußerst erschwert.

Es ist daher Aufgabe der Erfindung, herkömmliche CRT-Systeme durch besser wirkende Feinstpartikelabscheide- und -oxidationssysteme zu ersetzen und in einen Abgasstrang einer Brennkraftmaschine so einzubinden, dass deren Platzbedarf einschließlich jenem für die erforderlichen Schalldämpfungsmaßnahmen geringer als bisher ist und deren Einsatz z. B. in Serienfahrzeugen möglich ist.

Diese Aufgabe ist erfindungsgemäß entsprechend dem Kennzeichen des Anspruches 1 durch folgende Merkmale gelöst:
- einen Vorschalldämpfer und einen Hauptschalldämpfer in der Abgasleitung,
- eine Vorrichtung zur Abscheidung und Oxidation von Feinstpartikeln aus dem Abgas, bestehend aus wenigstens einem den NO₂-Anteil des Stickoxids im Abgas signifikant erhöhenden Oxidationskatalysator und stromab desselben wenigstens einem filterlosen Partikelabscheider und -oxidator,
- der Hauptschalldämpfer ist außen durch eine vordere Stirnwand, eine hintere Stirnwand und eine Umfangswand begrenzt sowie innen durch eine Wand in eine Einströmkammer und eine Ausströmkammer unterteilt,
- der wenigstens eine Partikelabscheider und -oxidator ist in den Hauptschalldämpfer, dort einenendes mit der Einströmkammer, anderenendes mit der Ausströmkammer kommunizierend, eingebaut,
- der Hauptschalldämpfer ist endrohrlos ausgebildet und weist an seiner abgasaustrittsseitigen Stirnwand und/oder dem abgasaustrittsseitigen Endbereich seiner Umfangsaußenwand oder einem für Abgasauslass vorgesehenen Bereich seiner abgasaustrittsseitigen Stirnwand eine oder mehrere für einen direkten endrohrlosen Auslass des gereinigten Abgases aus der Ausströmkammer in die Atmosphäre entsprechend gestaltete Auslassöffnungen auf,
- der Hauptschalldämpfer ist auf ein Teilschalldämpfungsvolumen ausgelegt und das im Hauptschalldämpfer fehlende Schalldämpfungsvolumen ist im Vorschalldämpfer realisiert, der beabstandet zum Hauptschalldämpfer möglichst motomah in die Abgasleitung eingebaut ist,
- der wenigstens eine Oxidationskatalysator ist entweder in den Vorschalldämpfer oder vor bzw. nach diesem in die Abgasleitung eingebaut.

Mit der erfindungsgemäßen Merkmalskombination wird erstmalig die Aufteilung des Schalldämpfungsvolumen und der Schalldämpfungsmaßnahmen auf einen Vorschalldämpfer und einen Hauptschalldämpfer sowie die Integration einer notwendigen Anzahl von filterlosen Partikelabscheide- und -oxidationsmodulen in einen speziell gestalteten Hauptschalldämpfer und eine günstigere Einbauart für die notwendige Anzahl von Oxidationskatalysatoren vorgeschlagen. Dadurch, dass bei der erfindungsgemäßen Lösung das bisher notwendige Endrohr, gegebenenfalls auch ein Nachschalldämpfer entfallen und ein endrohrloser Hauptschalldämpfer geschaffen ist, steht nun in dessen Innenraum hinreichend Platz für die Unterbringung der Partikelabscheide- und -oxidationsmodule sowie schalldämmender Einbauten zur Verfügung. Durch die Aufteilung des Schalldämpfungsvolumens auf den Hauptschalldämpfer und den Vorschalldämpfer ergibt sich eine günstigere Einbaumöglichkeit für die Abgasanlage, denn der endrohrlose Hauptschalldämpfer hat nicht die Größe wie ein bisher notwendiger Schalldämpfer mit Endrohr. Eine platzsparende Bauweise wird mit der Erfindung auch dadurch erreicht, dass der bzw. die Oxidationskatalysator(en) entweder in den Vorschalldämpfer oder in die Abgasleitung vor bzw. nach diesem, z. B. in einen Abgaskrümmer, einbaubar sind, hierfür also kein Raum im Hauptschalldämpfer beansprucht wird.

Nachstehend ist die erfindungsgemäße Lösung anhand mehrerer in der Zeichnung dargestellter Ausführungsbeispiele noch näher erläutert. In der Zeichnung zeigen die Figurenpaare 1-2, 3-4, 5-6, 7-8, 9-10, 11-12, 13-14, 15-16 jeweils ein Ausführungsbeispiel eines erfindungsgemäßen Abgasstranges. Dabei zeigen die ungeradzahligen Figuren diesen schematisch im Längsschnitt. Die Figuren 2, 4, 6 und 8 zeigen den Hauptschalldämpfer des jeweiligen Abgasstranges in Ansicht auf seiner Abgasaustrittsseite. Die Figuren 10, 12, 14, 16 zeigen jeweils einen Querschnitt durch den Abgasstrang des betreffenden Beispiels entlang der römisch-zahlig angegebenen Schnittlinie in der zugeordneten ungradzahligen Figur. Die Figuren 17- 18 zeigen ein Ausführungsbeispiel für einen Vorschalldämpfer mit integrierten Oxidationskatalysatoren im Längs- und Querschnitt. Figur 19 zeigt einen Abgasleitungsabschnitt mit eingebauten Oxidationskatalysatoren.

In den Figuren sind gleiche bzw. einander entsprechende Bauteile mit gleichen Bezugszeichen angezogen.

In den Figuren ist ein Ausschnitt aus einem Abgasstrang einer Brennkraftmaschine, insbesondere eines Dieselmotors eines Nutzfahrzeuges wie Lastkraftwagen oder Omnibus gezeigt. Der Abgasstrang besteht aus einer mehrteiligen Abgasleitung 1 mit verschiedenen Einbauten. Die Abgasleitung 1 beginnt in Form von zylinderkopfseitig an der Brennkraftmaschine angeflanschten Auspuffkanälen, die in ein oder mehrere Abgassammelrohre ausmünden und entweder direkt oder Ober Auspuffkrümmer an einer Abgasturbine eines einoder mehrstufigen Abgasturboladeraggregates angeschlossen ist bzw. sind. Am Abgasauslass dieses Abgasturboladeraggregates schließt sich ein Abgasleitungsteilstück an, in das entsprechend der Erfindung ein Vorschalldämpfer 2 eingebaut ist und das in einen Hauptschalldämpfer 3 einmündet.

Einem weiteren Merkmal der Erfindung entsprechend ist eine Vorrichtung zur Abscheidung und Oxidation von Feinstpartikeln aus dem Abgas vorgesehen, die aus wenigstens einem den NO₂-Anteil des Stickoxids im Abgas signifikant erhöhenden Oxidationskatalysator 4 und stromab desselben wenigstens einem filterlosen Partikelabscheider und -oxidator 5 besteht.

Der Hauptschalldämpfer 3 ist erfindungsgemäß außen durch eine vordere Stirnwand 6, eine hintere Stirnwand 7 und eine Umfangwand 8 begrenzt sowie innen durch eine gasdichte Zwischenwand 9 in eine Einströmkammer 10 und eine Ausströmkammer 11 unterteilt.

Einem weiteren Merkmal der Erfindung entsprechend ist der wenigstens eine Partikelabscheider und -oxidator 5 in den Hauptschalldämpfer 3 eingebaut, und zwar so, dass er einenendes mit der Einströmkammer 10 und anderenendes mit der Ausströmkammer 11 kommuniziert. Vorzugsweise sind jedoch mehrere Partikelabscheide- und -oxidationsrmodule 5 in jeweils einem eigenen Modulgehäuse 12 vorgesehen, die parallel zueinander und zur Längsachse des Hauptschalldämpfers 3 angeordnet in diesem eingebaut sind und dort von der Zwischenwand 9 und gegebenenfalls einer weiteren, hierzu parallelen, nicht gasdichten Haltewand 13 lagestabil in Einbaulage gehalten sind. Auf die innere Ausgestaltung und Funktion des/der Partikelabscheide- und -oxidationsmodule(s) 5 ist weiter hinten näher eingegangen.

Einem weiteren Merkmal der Erfindung entsprechend ist der Hauptschalldämpfer 3 endrohrlos ausgebildet und weist an seiner abgasaustrittsseitigen Stirnwand 7 und/oder dem abgasaustrittsseitigen Endbereich seiner Umfangswand 8 oder einem für Abgasauslass vorgesehenen Bereich 14 seiner abgaseintrittsseitigen Stirnwand 6 eine oder mehrere für einen direkten, endrohrlosen Auslass des gereinigten Abgases aus der Ausströmkammer 11 in die Atmosphäre entsprechend gestaltete Auslassöffnung(en) 15 auf.

Einem weiteren Merkmal der Erfindung entsprechend ist der Hauptschalldämpfer 3 nur auf ein Teilschalldämpfungsvolumen ausgelegt und das im Hauptschalldämpfer 3 fehlende Schalldämpfungsvolumen ist im Vorschalldämpfer 2 realisiert, der beabstandet zum Hauptschalldämpfer 3 möglichst motomah in die Abgasleitung 1 eingebaut ist.

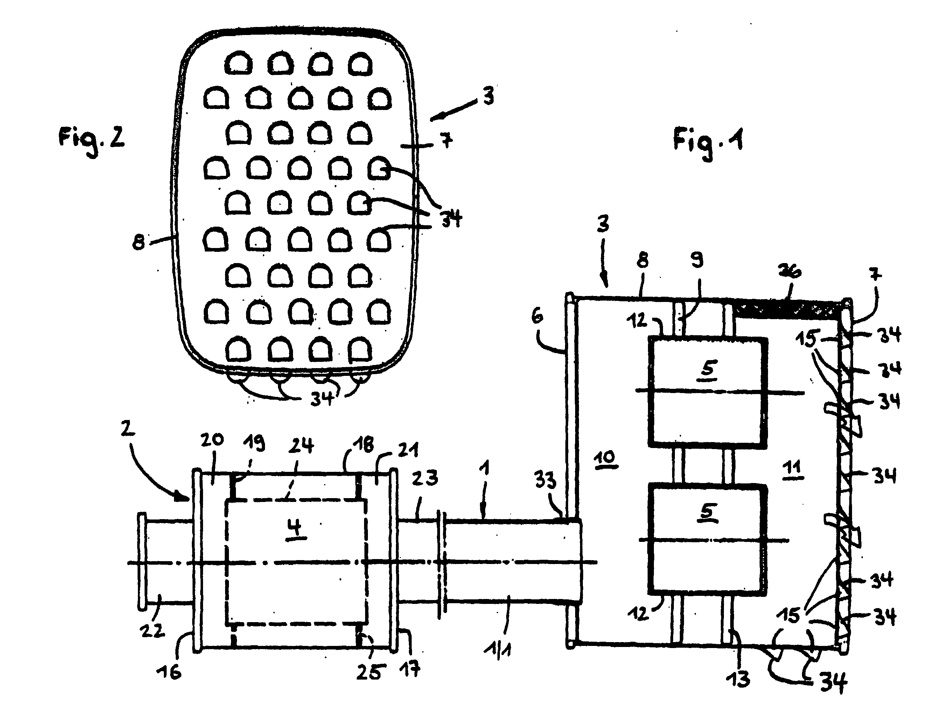

Einem werteren Merkmal der Erfindung entsprechend ist der wenigstens eine Oxidationskatalysator 4 entweder in den Vorschalldämpfer 2 (siehe Fig. 1, 3, 5, 7, 9, 11, 13, 15, 17, 18) oder vor bzw. nach diesem in die Abgasleitung 1 eingebaut (siehe Fig. 19).

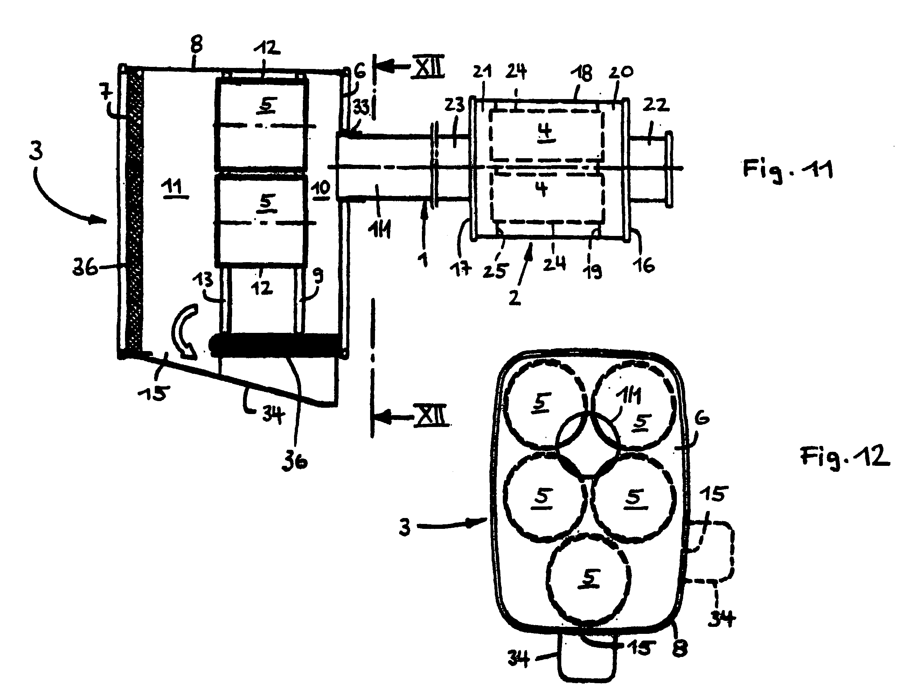

Nachstehend ist auf verschiedene weitere Details von Ausführungsbeispielen für den Vorschalldämpfer 2 näher eingegangen. Wie die Figuren 1 bis 18 zeigen, ist der Vorschalldämpfer 2 außen durch eine vordere, abgaseintrittsseitige Stirnwand 16, eine hierzu parallele hintere, abgasaustrittsseitige Stirnwand 17 und eine zylindrische Umfangswand 18 begrenzt. Der Innenraum dieses etwa tonnenförmigen Vorschalldämpfers 2 ist durch eine gasdichte Zwischenwand 19 in eine Einströmkammer 20 und eine Ausströmkammer 21 unterteilt. In die Einströmkammer 20 mündet ein an der abgaseintrittsseitigen Stirnwand 16 angeschlossener Rohrstutzen 22 ein, an dem entweder eine an der Brennkraftmaschine angeschlossene Abgassammelleitung oder ein an letzterer angeschlossener Abgaskrümmer oder der Auslassstutzen einer Abgasturbine eines ein- oder mehrstufigen Abgasturboladeaggregates oder ein an letzteres angeschlossenes Abgasleitungsteilstück angeflanscht ist. Von der die Ausströmkammer 21 begrenzenden Stirnwand 17 geht entweder direkt oder über einen Rohrstutzen 23 ein zum Hauptschalldämpfer 2 hin führendes Abgasleitungsteilstück 1/1 ab.

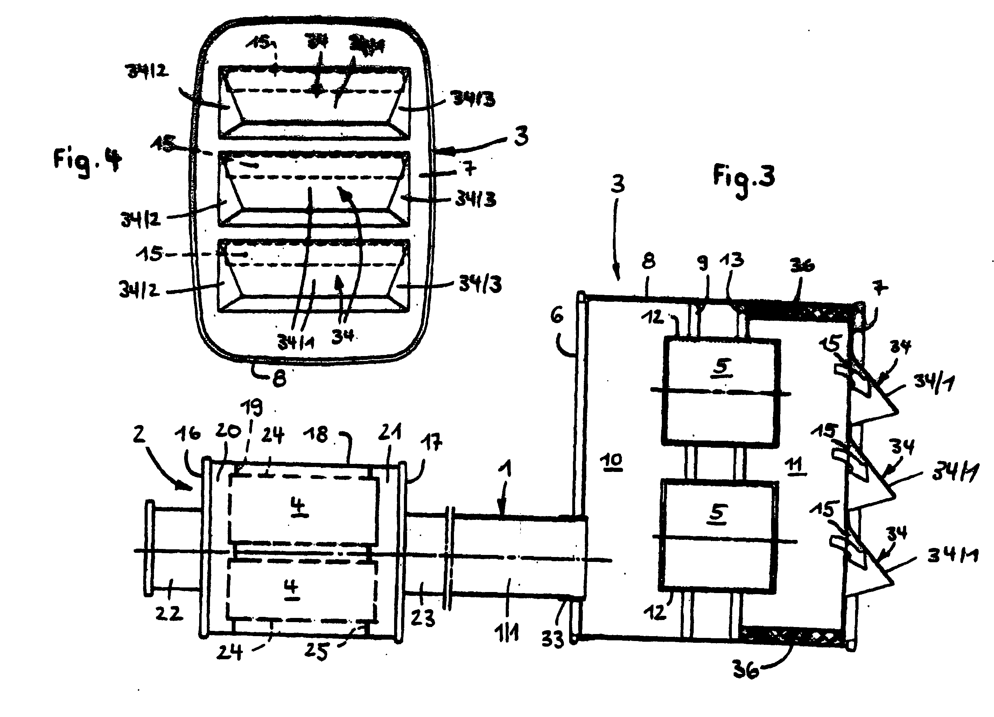

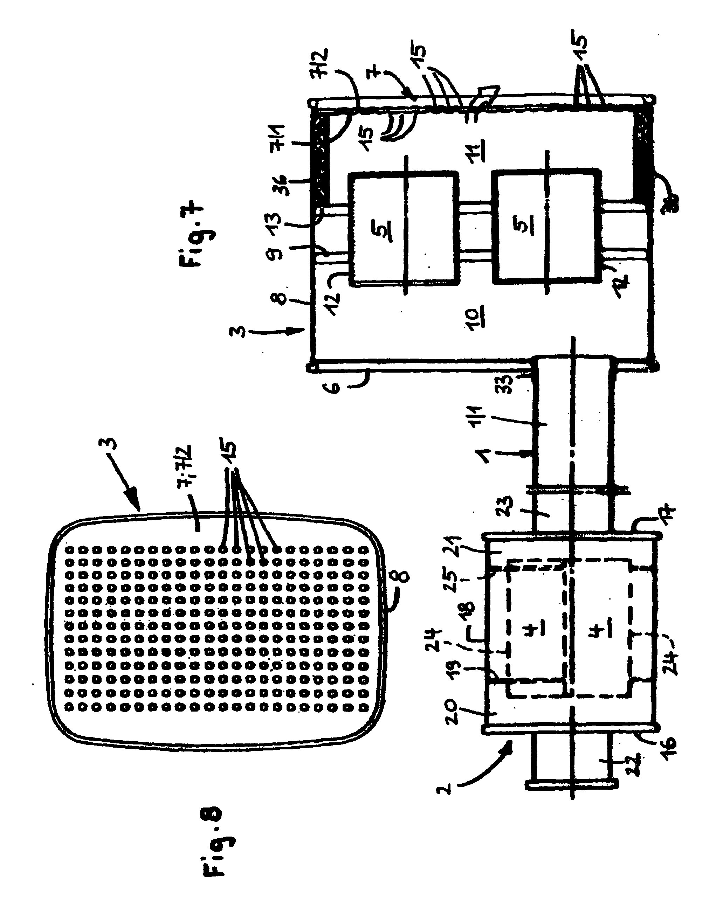

In dem Innenraum des Vorschalldämpfers 2 können entweder ein in ein Gehäuse 24 eingepackter großvolumiger Oxidationskatalysator 4 (siehe z. B. Fig. 1) oder mehrere, jeweils in ein eigenes Gehäuse 24 eingepackte kleinervolumige Oxidationskatalysatoren 4 eingebaut sein. Im Fall von Fig. 3, 5, 9, 11, 13, 15 sind zwei oder vier, im Fall der Beispiele gemäß Fig. 7 und 17, 18 sind drei Oxidationskatalysatoren 4 parallel durchströmbar eingebaut. Dabei sind der bzw. die Oxidationskatalysator(en) 4 im Innenraum des Vorschalldämpfers 2 achsparallel zu dessen Längsachse und zueinander durch die gasdichte Zwischenwand 19 und - soweit notwendig (wie dargestellt) - durch eine weitere, nicht gasdichte, z. B. perforierte Haltewand 25 lagestabil in Einbaulage gehalten. In Einbaulage kommunizieren der/die Oxidationskatalysator(en) 4 einenendes mit der Einströmkammer 20, anderenendes mit der Ausströmkammer 21 und ihre Gehäuse 24 sind mit der jeweiligen Stirnseite von der benachbarten Stirnwand 16 bzw. 17 des Vorschalldämpfers 2 um ein gewisses Maß beabstandet.

Alternativ hierzu können - wie Fig. 19 zeigt - mehrere im Gehäuse 24 eingepackte Oxidationskatalysatoren 4 in ein Abgasleitungsteilstück 1/2 eingebaut sein, und zwar achsparallel zueinander für paralleles Durchströmen, aber unter einem spitzen Winkel zu der die beiden Anschlussstutzen 26, 27 verbindenden Längsachse des Abgasleitungsteilstückes 1/2 stehend. Dieses weist zwischen den beiden Anschlussstutzen 26, 27 einen entsprechend großen Einbauraum 28 für die Oxidationskatalysatoren 4 auf, der intern durch eine gasdichte Zwischenwand 29 in eine Einströmkammer 30 und eine Ausströmkammer 31 unterteilt ist. Mittels der Zwischenwand 29 und gegebenenfalls einer weiteren, nicht gasdichten Haltewand 32 sind die Oxidationskatalysatoren 4 lagestabil in Einbaulage gehalten. Das Abgasleitungsteilstück 1/2 ist z. B. in Längsrichtung in zwei Halbschalen quergeteilt, die einen Einbau der Oxidationskatalysatoren 4 sowie der Wände 29, 32 ermöglichen und anschließend gasdicht zusammengebaut sind.

Nachfolgend ist auf weitere Details von Ausführungsbeispielen des Hauptschalldämpfers 3 näher eingegangen. In den dargestellten Beispielen sind dessen beide Stirnwände 6, 7 weitestgehend eben und parallel zueinander angeordnet. Die Umfangswand 8 ist zylindrisch. Es liegt somit ein etwa tonnenförmiger Hauptschalldämpfer 2 vor, in dessen Innenraum die gasdichte Zwischenwand 9 und die gegebenenfalls des weiteren vorgesehene Haltewand 13 parallel zu den Stirnwänden 6, 7 angeordnet und an der Innenseite der Umfangsaußenwand 8 befestigt, z. B. angeschweißt sind.

In die Einströmkammer 10 des Hauptschalldämpfers 3 mündet die Abgasleitung 1 mit einem Teilstück 1/1 ein, das an einem in der Stirnwand 6 gegebenen Rohrstutzen 33 angeschlossen ist. Im Fall des Beispiels gemäß Fig. 15-16 setzt sich die Abgasleitung 1 intern des Hauptschalldämpfers 3 mit einem Teilstück 1/3 fort, das dort die Ausströmkammer 11, die Zwischenwand 9 und die Tragwand 13 durchdringt und hinter der Tragwand 13 in die Einströmkammer 10 ausmündet.

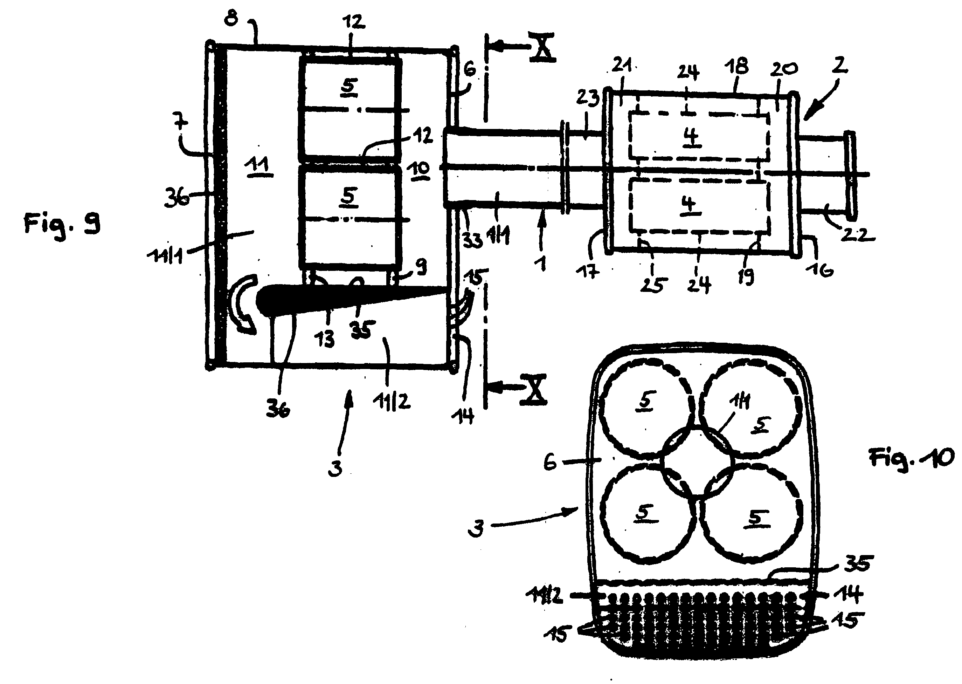

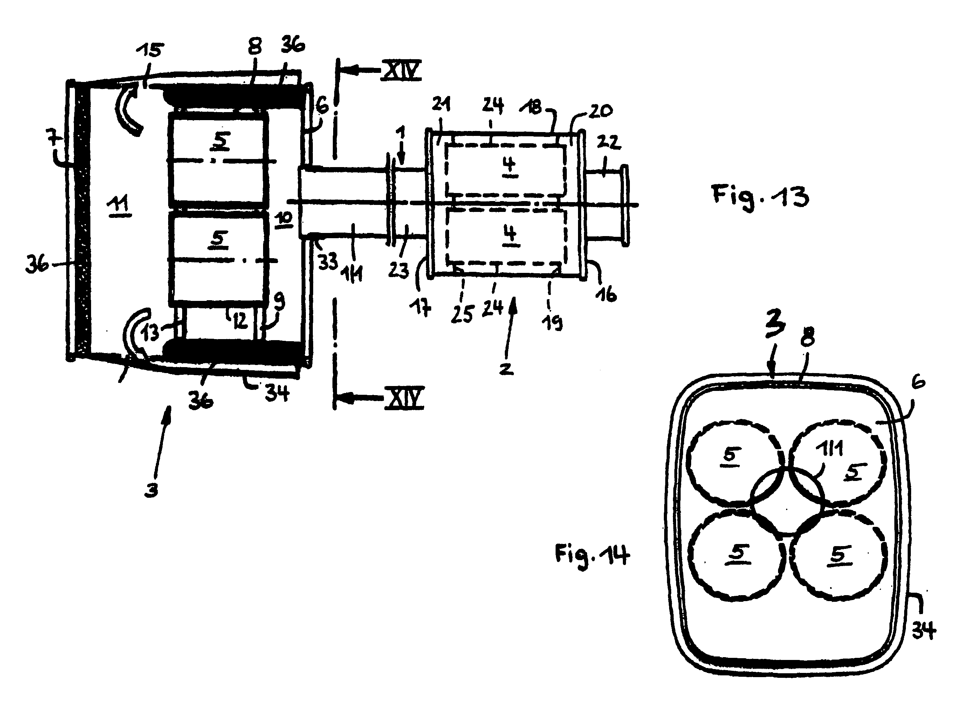

In den Beispielen gemäß Fig. 1-2, 3-4, 5-6, 7-8 sind entweder zwei oder vier, in den Beispielen gemäß Fig. 9-10, 13-14, 17-18, 19-20 sind vier, im Fall der Beispiele gemäß Fig. 11-12 und 15-16 sind fünf Partikelabscheider- und -oxidationsmodule 5 in den Hauptschalldämpfer 3 eingebaut.

Unabhängig von seiner sonstigen Ausgestaltung kennzeichnet sich der Hauptschalldämpfer 3 erfindungsgemäß dadurch, dass er entweder an seiner abgasaustrittsseitigen Stimwand 7 - siehe Fig. 1-2, 3-4, 5-6, 7-8 - und/oder dem abgasaustrittsseitigen Endbereich seiner Umfangswand 5 - siehe Fig. 1-2, 11-12, 13-14 - oder einem für Abgasauslass vorgesehenen Bereich 14 seiner abgaseintrittsseitigen Stirnwand 6 - siehe Fig. 9-10, 15-16 - eine oder mehrere für einen direkten, endrohrlosen Auslass des gereinigten Abgases in die Atmosphäre entsprechend gestaltete Auslassöffnung(en) 15 aufweist.

Dabei kann jeder Auslassöffnung 15 oder einer Gruppe von Auslassöffnungen 15 ein Strömungsleitelement 34 zugeordnet sein, das dem aus der Ausströmkammer 11 in die Atmosphäre austretendem Abgas eine bestimmte Richtung oder Richtungsänderung, z. B. nach unten oder schräg nach hinten zur Fahrbahn hin aufprägt. Außerdem kann jedes Strömungsleitelement 34 auch im Hinblick darauf ausgebildet sein, dass dem durch- bzw. vorbeiströmenden Abgas eine definierte Druckentspannung aufprägbar ist. Letzteres kann durch speziell eingebaute oder vorgesehene Leitwände bzw. weitere Umlenkorgane realisiert sein.

Im Beispiel von Fig. 1-2 ist eine Vielzahl von Auslassöffnungen in der abgasaustrittsseitigen Stirnwand 7 vorgesehen und jeder dieser Auslassöffnungen 15 eine nach Art einer Hutze ausgebildetes Strömungsleitelement 34 zugeordnet. In diesem Fall sind die Auslassöffnungen 15 und die zugeordneten Hutzen 34 einstückig mit der Stirnwand 7 des Hauptschalldämpfers 3 durch Ausstanzen und Ausprägen hergestellt.

Im Beispiel von Fig. 3-4 sind drei Auslassöffnungen 15 in der abgasaustrittsseitigen Stimwand 7 des Hauptschalldämpfers 3 vorgesehen, von denen jede durch ein nach Art einer Hutze gestaltetes Strömungsleitelement 34 überdeckt ist, wobei die jeweilige Hutze eine schräg nach hinten unten gerichtete Abgasleitwand 34/1 aufweist, die in seitliche Begrenzungswände 34/2, 34/3 übergeht und somit eine Art Diffusor bildet.

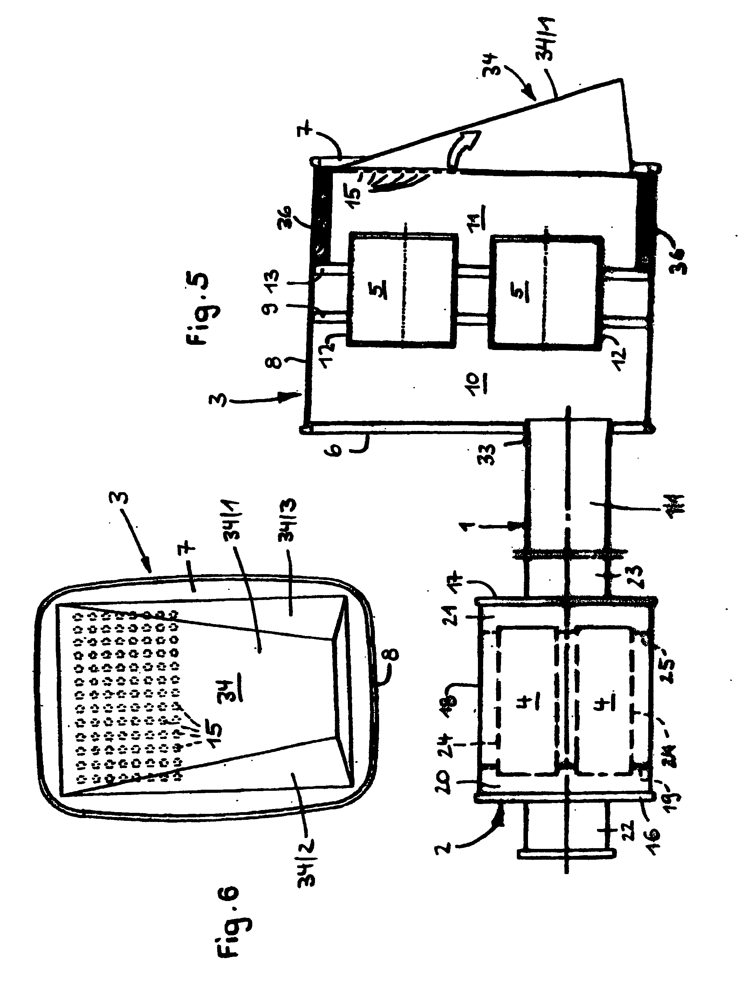

Im Beispiel gemäß Fig. 5-6 ist eine Vielzahl von Auslassöffnungen 15 in der oberen Hälfte der abgasaustrittsseitigen Stirnwand 7 des Hauptschalldämpfers 3 vorgesehen. Diese Auslassöffnungen 15 sind von einem außen auf die Stirnwand 4 aufgesetzten, nach Art einer Hutze gestalteten Strömungsleitelement 34 überdeckt Diese Hutze weist eine schräg nach hinten unten weit heruntergezogene Abgasleitwand 34/1 auf, die in seitliche Begrenzungswände 34/2, 34/3 übergeht. Strömungsmäßig bildet diese Hutze einen sich keglig erweiternden Diffusor.

Im Beispiel gemäß Fig. 7-8 besteht die abgasaustrittsseitige Stirnwand 7 des Hauptschalldämpfers 3 aus mindestens zwei um ein gewisses Maß parallel voneinander beabstandeten Teilwänden 7/1, 7/2, wobei der größte Teil jeder derselben mit die Auslassöffnungen 15 bildenden Löchern perforiert ist. Dabei sind die Auslassöffnungen 15 in der äußeren Teilwand 7/2 so angeordnet, dass sie nicht zu jenen in der inneren Teilwand 7/1 angeordneten Auslassöffnungen 15 fluchten. Vielmehr sind die Auslassöffnungen 15 der inneren Teilwand 7/1 in ihrer axialen Projektion außen durch einen nicht perforierten Wandbereich der äußeren Teilwand 7/2, der neben bzw. zwischen benachbarten Auslassöffnungen 15 gegeben ist, abgedeckt. Das aus der Ausströmkammer 11 austretende Abgas gelangt nach Durchströmung der Auslassöffnungen 15 der inneren Teilwand 7/1 in den Zwischenraum zwischen beiden Teilwänden 7/1, 7/2 und tritt von dort über die Auslassöffnungen 15 in der äußeren Teilwand 7/2 in die Atmosphäre aus. Es wäre denkbar, dieser Stirnwand 7/1, 7/2 ein Strömungsleitelement 34 in Form einer Hutze zuzuordnen, die wie jene gemäß Fig. 5-6 ausgebildet sein könnte.

Im Beispiel von Fig. 9-10 ist jener untere Bereich 14 der abgaseintrittsseitigen Stirnwand 6, der eine untere Teilkammer 11/2 der Ausströmkammer 11 abdeckt, durch eine Vielzahl von die Auslassöffnungen 15 bildenden Löchern perforiert. Intern des Hauptschalldämpfers 3 gelangt das gereinigte Abgas in einen Teilraum 11/1 der Ausströmkammer 11 und von dort über den unteren Teilraum 11/2, der einen diffusorähnlichen Querschnitt aufweist und durch eine oder mehrere Längszwischenwände 35 zur Einströmkammer 10 hin abgeschottet ist, zur abgaseintrittsseitigen Stirnwand 6 und tritt dort im Bereich 14 über die Auslassöffnungen 15 in die Atmosphäre aus. Es wäre denkbar, diesen mit Auslassöffnungen 15 perforierten Bereich 14 der Stirnwand 6 mit einem nach Art einer Hutze ausgebildeten Strömungsleitelement 34 zu überdecken, um dem austretenden Abgas eine Richtungskomponente nach unten bzw. schräg nach hinten unten aufzuprägen.

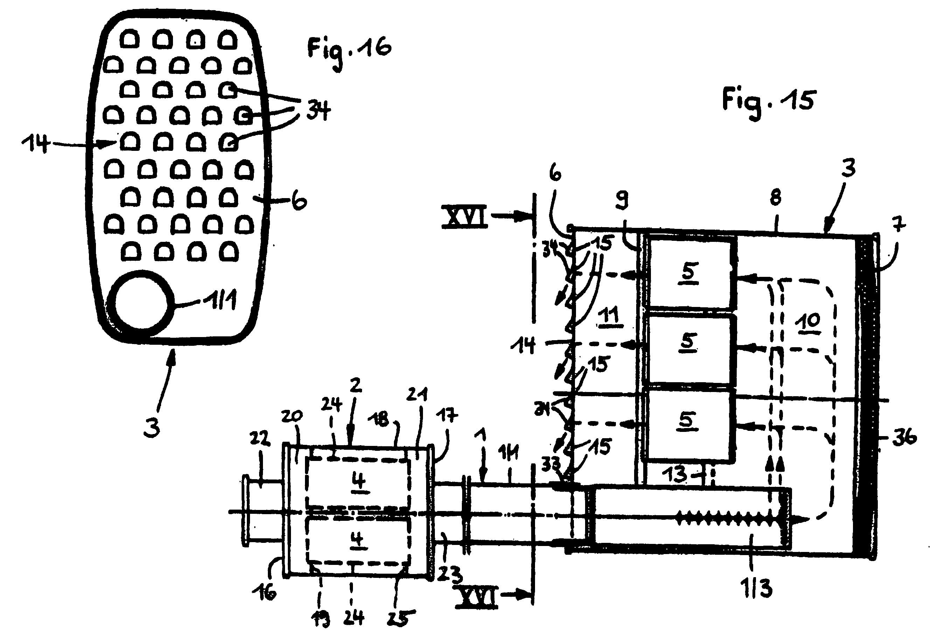

Im Beispiel von Fig. 11-12 ist im Bereich der Ausströmkammer 11 in der Außenumfangswand 8 eine Auslassöffnung 15 vorgesehen, der ein nach Art einer Hutze ausgebildetes und sich diffusorartig erweiterndes Strömungsleitelement 34 zugeordnet ist. Dieses erstreckt sich von der Stirnwand 7 in Richtung Stirnwand 6 ganz oder teilweise bis zu dieser hin. Anstelle nur einer Auslassöffnung 15 im unteren Bereich des Hauptschalldämpfers 3 könnten auch noch wenigstens eine weitere seitliche Auslassöffnung 15 in der Umfangsaußenwand 8 vorgesehen sein, der ebenfalls ein entsprechendes Strömungsleitelement 34 - wie dargestellt - zugeordnet wäre. Dieser Fall ist gestrichelt in Fig. 12 andeutet.

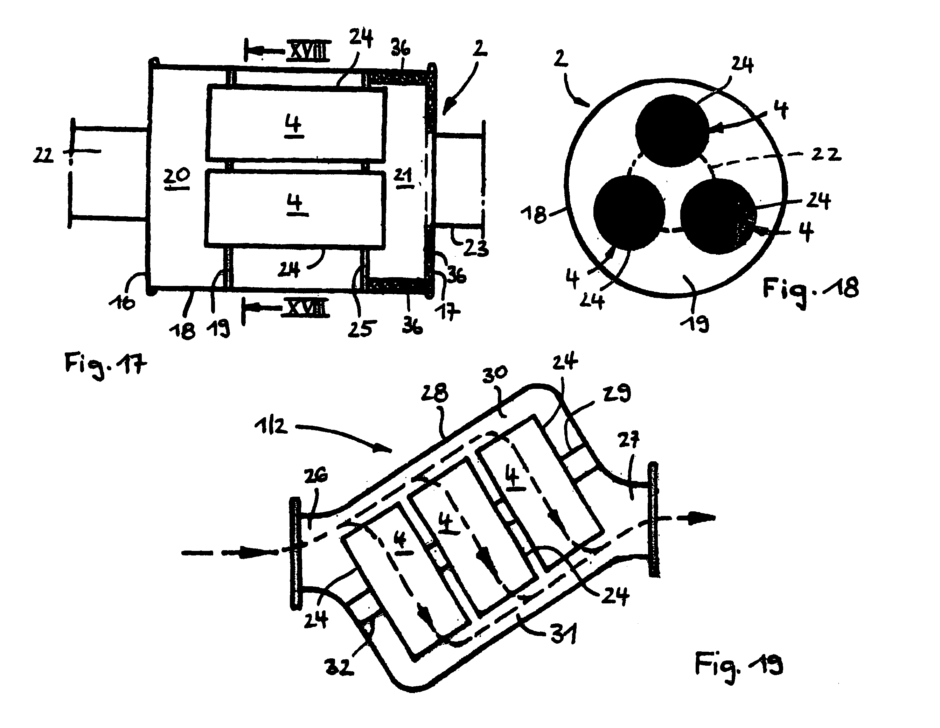

Im Beispiel gemäß Fig. 13-14 sind im Bereich der Ausströmkammer 11 in der Umfangsaußenwand 8 mehrere Auslassöffnungen 15 vorgesehen. Das durch diese austretende Abgas wird in einem trichterrohrartigen Strömungsleitelement 34, das zwischen den beiden Stirnwänden 7,6 die gesamte Umfangsaußenwand 8 sich diffusorartig erweiternd umgibt, kanalisiert in die Atmosphäre ausgelassen.

Im Beispiel gemäß Fig. 15-16 ist ein Großteil der abgaseintrittsseitigen Stirnwand 6 des Hauptschalldämpfers 3, die in diesen Fällen die Ausströmkammer 11 stirnseitig begrenzt, mit einer Vielzahl von Auslassöffnungen 15 ausgestattet, von denen jeder ein durch eine Hutze gebildetes Strömungsleitelement 34 zugeordnet ist. Auch in diesem Fall sind die Auslassöffnungen 15 und die Hutzen 34 einstückig mit der Stirnwand 6 durch Ausstanzen und Ausprägen ausgebildet.

Hinsichtlich der Schalldämpfungsmaßnahmen ist folgendes zu erwähnen. Der Hauptschalldämpfer 3 ist innenseitig zumindest im Bereich seiner Ausströmkammer 11, 11/1, 11/2 zumindest partiell mit schallabsorbierendem Material ausgekleidet. Ebenso ist der Vorschalldämpfer 2 innenseitig zumindest im Bereich seiner Ausströmkammer 28 zumindest partiell mit schallabsorbierendem Material ausgekleidet. Solche Zonen mit schallabsorbierendem Material sind in der Zeichnung mit 36 bezeichnet.

Generell sind das im Hauptschalldämpfer 3 gegebene Teilschalldämpfungsvolumen in Verbindung mit den dortigen Schalldämpfungsmitteln 36 und das im Vorschalldämpfer 2 gegebene Teilschalldämpfungsvolumen in Verbindung mit den dortigen Schalldämpfungsmitteln 36 so ausgelegt, dass sie aufaddiert einen Gesamtschalldämpfungseffekt ergeben, mit dem die gesetzlich vorgeschriebenen Schallemissionsgrenzwerte erreicht bzw. unterschritten werden.

Nachstehend ist noch auf verschiedene Bau- und Funktionsprinzpien des/der erfindungsgemäß verwendeten Partikelabscheide- und -oxidationsmodule 5 näher eingegangen. Diesen liegt der allgemeine Erfindungsgedanke zugrunde, die Partikel, insbesondere Feinstpartikel filterlos abzuscheiden, so dass ein unerwünschtes Verstopfen bzw. zu starkes Beladen derselben vermeidbar ist. Hierzu ist jeder Partikelabscheide- und -oxidationsmodul 5 intern derart ausgestaltet, dass die im Abgas enthaltenen Feinstpartikel entweder
a) durch Thermophorese an gekühlten Oberflächen, oder
b) durch Konvektion an speziell strukturierten Oberflächen und/oder aufgrund von wiederholtem Umlenken der Strömung, oder
c) durch Diffusion in Strömungstotzonen und/oder engen Strömungskanälen, deren kleinster freier Querschnitt zwischen 25 µm² und 250 µm² liegt,
abscheidbar sind. Denkbar wäre auch, den bzw. die Partikelabscheide- und -oxidationsmodul(e) 5 intern so auszugestalten, dass die im Abgas enthaltenen Feinstpartikel durch eine Kombination der vorstehend unter a) bis c) angegebenen Methoden Thermophorese, Konvektion und Diffusion abscheidbar sind.

Allen Varianten ist gemeinsam, dass sie mit Abgas beaufschlagt werden, in dem der NO₂-Anteil des Stickoxids beim vorherigen Durchströmen des bzw. der z. B. mit Platin beschichteten Oxidationskatalysator(en) 4 mit Hilfe des Restsauerstoffes signifikant erhöht wurde.

Im Fall der Thermophorese werden die aus Kohlenstoff und/oder kondensierten Kohlenwasserstoffen bestehenden Feinstpartikel in dem bzw. den Partikelabscheide- und -oxidationsmodul(en) 5 an den gekühlten Oberflächen abgeschieden. Dabei können diese modulintemen Oberflächen durch ein gasförmiges oder flüssiges Kühlmittel auf eine geeignete Temperatur heruntergekühlt werden und z. B. an Platten eines Plattenwärmetauschers oder gekühlten Rohren eines Rohrbündelwärmetauschers oder der Struktur eines metallischen Katalysatorträgerkörpers gegeben sein. Eine Abkühlung der Oberflächen kann auch dadurch bewirkt oder unterstützt werden, dass in die Abgasleitung 1 kurz vor dem Hauptschalldämpfer 3 oder in dessen Einströmkammer 10 eine wässrige Lösung eingedüst wird, die durch Verdunstung eine Abkühlung der Oberflächen und damit eine Erhöhung der thermophoresischen Wirkung erbringt. Die Thermophorese stellt sich dabei in der Theorie wie folgt dar: Heißes Abgas strömt an den kalten Oberflächen entlang. An diesen bildet sich im Abgasstrom eine Grenzschicht aus, in der die Temperatur in einer bestimmten Weise in Bezug auf das weiter von der kalten Oberfläche entfernte Abgas abfällt. Die Gasmoleküle bewegen sich aufgrund der in der Grenzschicht gegebenen niedrigeren Temperatur langsamer als in heißeren Abgaszonen. Treffen nun Gasmoleküle auf einen Partikel, so übertragen sie einen Impuls, der innerhalb der Grenzschicht niedriger als außerhalb derselben ist. Daraus resultiert eine asymmetrische Impulsübertragung auf das Partikel, wodurch dieses in Richtung der kalten Oberflächen bewegt wird, bis es dort auftrifft und sich dort wegen der auftretenden Von-der-Walls-Kräfte anlagern. Der Einfluss der Thermophorese nimmt zu, je kleiner die Partikel sind. Partikel mit einer Größe bzw. Masse über 700 nm sind daher mit der Thermophorese kaum mehr abscheidbar.

Im Fall der Konvektion ist der bzw. sind die Partikelabscheide- und -oxidationsmodul(e) 5 intern mit solchen Strukturen ausgebildet und deren Oberflächen so verrippt, vemoppt, gewellt oder durch sonstige Mittel vergrößert, dass die im vorbeiströmenden Abgas enthaltenen Partikel ständig zu Oberflächenkontakten gezwungen werden und sich dadurch an den Oberflächen der Strukturen abscheiden. Ein besonders hoher Abscheidegrad wird erzielt, wenn die modulinternen Strukturen so ausgebildet sind, dass sich die Richtung der Abgasströmung ständig ändert, z. B. einem Zick-Zack-Kurs folgen muss. Dieses hat zur Folge, dass Partikel ständig auf Strömungshindernisse treffen, an denen sie sich anlagern. Außerdem ist es möglich, den Strukturen innerhalb eines Moduls 5 eine solche Form zu geben bzw. die Strömungskanäle so auszubilden und mit speziellen Leitvorrichtungen auszustatten, dass die Abgasströmung in Rotation versetzt wird. Dieses erzeugt Fliehkräfte, die eine Randanlagerung der Partikel an den Strömungskanälen begünstigen.

Im Fall der Diffusion zur Partikelabscheidung versteht man einen Partikeltransport aufgrund von Konzentrationensunterschieden. Dabei wird durch Abscheidung von Partikeln an einer Oberfläche die Partikelkonzentration in der Gasphase an dieser Stelle Null, so dass sich ein Konzentrationsgefälle zwischen Oberfläche und vorbeiströmendem Abgas ausbildet. Um die Diffusionsabscheidung zu begünstigen, ist es zweckmäßig, innerhalb des bzw. der Partikelabscheide- und -oxidationsmodul(e) 5 Strukturen und/oder Strömungskanäle vorzusehen, in denen Totzonen in der Strömung entstehen, was z. B. durch Querrippen, Leitbleche etc. geschehen kann. Dort geht die Strömungsgeschwindigkeit gegen Null und es bleibt eine längere Verweildauer für die relativ langsam ablaufende Diffusion. Eine Erhöhung der Diffusion ist durch Verkürzung der Diffusionswege z. B. durch Verringerung des Querschnitts der Strömungskanäle erzielbar. So haben sich Querschnitte zwischen 25 µm² und 250 µm² als brauchbar erwiesen. Die Diffusion eignet sich für die Abscheidung von Partikeln mit einer Größe < 30 nm.

Generell werden die in den bzw. den Partikelabscheide- und -oxidationsmodul(en) 5 nach den vorgenannten Methoden abgeschiedenen Partikel katalytisch mit Hilfe des in hohem Maße im Abgas vorhandenen, in dem bzw. den Oxidationskatalysator(en) 4 erzeugten NO₂ aufoxidiert bzw. verbrannt und setzen sich dabei zu CO, CO₂, N₂, NO um.

## Patentansprüche

1. Abgasstrang einer Brennkraftmaschine, insbesondere Dieselmotor eines Nutzfahrzeuges wie Lastkraftwagen oder Omnibus, mit integrierten Abgasnachbehandlungs- und Schalldämpfungsvorrichtungen, **gekennzeichnet durch** folgende Merkmale:
- einen Vorschalldämpfer (2) und einen Hauptschalldämpfer (3) in der Abgasleitung (1)
- eine Vorrichtung zur Abscheidung und Oxidation von Feinstpartikeln aus dem Abgas, bestehend aus wenigstens einem den NO₂-Anteil des Stickoxids im Abgas signifikant erhöhenden Oxidationskatalysator (4) und stromab desselben wenigstens einem filterlosen Partikelabscheider und -oxidator (5),
- der Hauptschalldämpfer (3) ist außen **durch** eine vordere Stirnwand (6), eine hintere Stirnwand (7) und eine Umfangswand (8) begrenzt sowie innen **durch** eine Wand (9) in eine Einströmkammer (10) und eine Ausströmkammer (11) unterteilt,
- der wenigstens eine Partikelabscheider und -oxidator (5) ist in den Hauptschalldämpfer (3), dort einenendes mit der Einströmkammer (10), anderenendes mit der Ausströmkammer (11) kommunizierend, eingebaut,
- der Hauptschalldämpfer (3) ist endrohrlos ausgebildet und weist an seiner abgasaustrittsseitigen Stirnwand (7) und/oder dem abgasaustrittsseitigen Endbereich seiner Umfangsaußenwand (8) oder einem für Abgasauslass vorgesehenen Bereich (14) seiner abgaseintrittsseitigen Stirnwand (6) eine oder mehrere für einen direkten endrohrlosen Auslass des gereinigten Abgases aus der Ausströmkammer (11) in die Atmosphäre entsprechend gestaltete Auslassöffnungen (15) auf,
- der Hauptschalldämpfer (3) ist auf ein Teilschalldämpfungsvolumen ausgelegt und das im Hauptschalldämpfer (3) fehlende Schalldämpfungsvolumen ist im Vorschalldämpfer (2) realisiert, der beabstandet zum Hauptschalldämpfer (3) möglichst motomah in die Abgasleitung (1) eingebaut ist,
- der wenigstens eine Oxidationskatalysator (4) ist entweder in den Vorschalldämpfer (2) oder vor bzw. nach diesem in die Abgasleitung (1) eingebaut.

2. Abgasstrang nach Anspruch 1, **dadurch gekennzeichnet, dass** der bzw. jeder der in den Innenraum des Hauptschalldämpfers (3) eingebaute(n) Partikelabscheide- und -oxidationsmodul(e) (5) mit seinem Gehäuse (12) achsparallel zur Längsmittelachse des Hauptschalldämpfers (3) verlaufend gasdicht in einer die Einströmkammer (10) zur Ausströmkammer (11) hin abschottenden Zwischenwand (9) und gegebenenfalls einer hierzu parallelen, nicht gasdichten Haltewand (13) befestigt ist, so, dass ein- und austrittsseitig ein größerer Abstand zur jeweils benachbarten Stirnwand (6, 7) gegeben ist.

3. Abgasstrang nach Anspruch 1, **dadurch gekennzeichnet, dass** am Hauptschalldämpfer (3) jeder Auslassöffnung (15) oder einer Gruppe von Auslassöffnungen (15) ein dem aus der Ausströmkammer (11) austretenden Abgas eine bestimmte Richtung oder Richtungsänderung aufprägendes Strömungsleitelement (34) zugeordnet ist.

4. Abgasstrang nach Anspruch 3, **dadurch gekennzeichnet, dass** am Hauptschalldämpfer (3) jedes Strömungsleitelement (34) auch im Hinblick darauf, dass dem durch- bzw. vorbeiströmenden Abgas eine definierte Druckentspannung aufprägbar ist, ausgebildet ist.

5. Abgasstrang nach einem der Ansprüche 3 und 4, **dadurch gekennzeichnet, dass** am Hauptschalldämpfer (3) jeder Auslassöffnung (15) ein nach Art einer Hutze ausgebildetes Strömungsleitelement (34) zugeordnet ist.

6. Abgasstrang nach Anspruch 5, **dadurch gekennzeichnet, dass** die Hutze(n) (34) einzeln hergestellt und dann außen an der die Auslassöffnungen (15) aufweisenden Stimwand (6, 7) des Hauptschalldämpfers (3) befestigt ist bzw. sind.

7. Abgasstrang nach einem der Ansprüche 5 und 6, **dadurch gekennzeichnet, dass** eine Hutze (34) durch ein Rohrbogensegment gebildet ist, dessen Umlenkwinkel - je nach dem Grad der gewünschten Abgasumlenkung nach unten - zwischen ca. 30° und 90° beträgt.

8. Abgasstrang nach Anspruch 7, **dadurch gekennzeichnet, dass** in eine Hutze (34) wenigstens eine Leitwand eingebaut ist, die sich vorzugsweise parallel zur Umleitlinie erstreckt.

9. Abgasstrang nach einem der Ansprüche 5 und 6, **dadurch gekennzeichnet, dass** die Hutze (34) eine schräg nach hinten unten gerichtete Abgasleitwand (34/1) aufweist, die in seitliche Begrenzungswände (34/2, 34/3) übergeht.

10. Abgasstrang nach Anspruch 5, **dadurch gekennzeichnet, dass** die Auslassöffnungen (15) und die zugeordneten Hutzen (34) einstückig mit der betreffenden Stirnwand (6 bzw.7) des Hauptschalldämpfers (3) durch Ausstanzen und Ausprägen hergestellt sind.

11. Abgasstrang nach einem der Ansprüche 3 und 4, **dadurch gekennzeichnet, dass** eine größere Anzahl von Auslassöffnungen (15) nur in einem bestimmten Bereich (14) einer Stirnwand (6 bzw. 7) des Hauptschalldämpfers (3), z. B. nur in deren oberer oder nur deren unterer Hälfte angeordnet ist, und dass diesen Auslassöffnungen (15) ein gemeinsames, nach Art einer Hutze ausgebildetes Strömungsleitelement (34) zugeordnet ist.

12. Abgasstrang nach einem der Ansprüche 3 bis 11, **dadurch gekennzeichnet, dass** die bzw. jede Hutze (34) am Hauptschalldämpfer (3) einen sich in Ausströmrichtung trichterartig erweiternden Diffusor bildet.

13. Abgasstrang nach Anspruch 1, **dadurch gekennzeichnet, dass** dann, wenn die Auslassöffnung(en) (15) in der Umfangswand (8) des Hauptschalldämpfers (3) gegeben ist bzw. sind, dieser bzw. diesen Auslassöffnung(en) (15) ein bzw. je ein oder ein gemeinsames nach Art einer Hutze gestaltetes Strömungsleitelement (34) zugeordnet ist, das sich von der einen Stirnwand (6 bzw. 7) zur bzw. in Richtung der anderen Stirnwand (7 bzw. 6) hin erstreckt und entweder Teilbereiche der Umfangsaußenwand (8) oder die gesamte Umfangswand (8) des Hauptschalldämpfers (3) überdeckt.

14. Abgasstrang nach Anspruch 11, **dadurch gekennzeichnet, dass** die Ausströmkammer (11) in dem Fall, wenn die Auslassöffnung(en) (15) in einem Teilbereich (14) der abgaseintrittsseitigen Stirnwand (6) des Hauptschalldämpfers (3) gegeben sind, durch eine oder mehrere Längszwischenwände (35) zur Einströmkammer (10) hin abgeschottet ist und mit der solchermaßen begrenzten Teilkammer (11/2) zu der/den Auslassöffnung(en) (15) in der Stirnwand (6) hinreicht.

15. Abgasstrang nach Anspruch 1, **dadurch gekennzeichnet, dass** in den Vorschalldämpfer (2) mehrere Oxidationskatalysatoren (4) mit ihren Gehäusen (24) achsparallel zu dessen Längsachse und zueinander eingebaut sind, derart, dass ein- bzw. austrittsseitig zur jeweils benachbarten Stirnwand (16, 17) des Vorschalldämpfers (2) ein bestimmter Abstand gegeben ist.

16. Abgasstrang nach Anspruch 1, **dadurch gekennzeichnet, dass** mehrere Oxidationskatalysatoren (4) mit ihren Gehäusen (24) achsparallel durchströmbar in ein Abgasleitungsteilstück (1/2) eingebaut sind, und zwar mit ihren Längsachsen unter einem spitzen Winkel zur Längsachse des Abgasleitungsteilstücks (1/2), wobei dieses intern durch eine gasdichte Zwischenwand (29) in eine Einströmkammer (30) und eine Ausströmkammer (3) unterteilt ist.

17. Abgasstrang nach Anspruch 15, **dadurch gekennzeichnet, dass** der Vorschalldämpfer (2) außen durch eine abgaseintrittsseitige Stirnwand (16), eine abgasaustrittsseitige Stirnwand (17) und eine Umfangswand (18) begrenzt ist, und dass der Innenraum des Vorschalldämpfers (2) durch eine gasdichte Zwischenwand (19) in eine Einströmkammer (20) und eine Ausströmkammer (21) unterteilt ist, wobei in die Einströmkammer (20) ein an der Stirnwand (16) angeschlossener Rohrstutzen (22) einmündet, an dem entweder eine Abgassammelleitung oder ein an letzterer angeschlossener Abgaskrümmer oder der Auslassstutzen einer Abgasturbine eines Abgasturboladeraggregates oder ein an letzterer angeschlossenes Abgasleitungsteilstück angeschlossen ist, und wobei die Oxidationskatalysatoren (4) durch die Zwischenwand (19) und gegebenenfalls eine weitere, nicht gasdichte Haltewand (25) lagestabil im Vorschalldämpfer-Innenraum gehaltert sind, und wobei von der die Ausströmkammer (21) begrenzenden Stirnwand (17) ein Rohrstutzen (23) oder ein zum Hauptschalldämpfer (3) hin führendes Abgasleitungsteilstück (1/1) abgeht.

18. Abgasstrang nach Anspruch 1, **dadurch gekennzeichnet, dass** der Vorschalldämpfer (2) innen zumindest im Bereich seiner Ausströmkammer (21) wenigstens partiell mit schallabsorbierendem Material (36) ausgekleidet ist.

19. Abgasstrang nach Anspruch 1, **dadurch gekennzeichnet, dass** der Hauptschalldämpfer (3) innen zumindest im Bereich der Ausströmkammer (11) wenigstens partiell mit schallabsorbierenden Material (36) ausgekleidet ist.

20. Abgasstrang nach Anspruch 1 **dadurch gekennzeichnet, dass** die Schalldämpfungsmaßnahmen im endrohrlosen Hauptschalldämpfer (3) addiert zu den Schalldämpfungsmaßnahmen im Vorschalldämpfer (2) einen Gesamtschalldämpfungseffekt ergeben, der der Einhaltung gesetzlicher Schallemissionswerte gerecht wird.

21. Abgasstrang nach einem der Ansprüche 1 und 2, **dadurch gekennzeichnet, dass** die im Abgas enthaltenden Feinstpartikel in den bzw. den Partikelabscheide- und -oxidationsmodul(en) (5) durch Thermophorese an gekühlten Oberflächen abscheidbar sind.

22. Abgasstrang nach einem der Ansprüche 1 und 2, **dadurch gekennzeichnet, dass** die im Abgas enthaltenen Feinstpartikel in dem bzw. den Partikelabscheide- und -oxidationsmodul(en) (5) durch Konvektion an strukturierten Oberflächen und/oder aufgrund von wiederholtem Umlenken der Strömung abscheidbar sind.

23. Abgasstrang nach einem der Ansprüche 1 und 2, **dadurch gekennzeichnet, dass** die im Abgas enthaltenen Feinstpartikel in dem bzw. den Partikelabscheide- und -oxidationsmodul(en) (5) durch Diffusion in Strömungstotzonen und/oder engen Strömungskanälen abscheidbar sind, wobei der kleinste freie Querschnitt der Strömungskanäle zwischen 25 µm² und 250 µm² liegt.

24. Abgasstrang nach einem der Ansprüche 21 bis 23, **dadurch gekennzeichnet, dass** die im Abgas enthaltenen Feinstpartikel in dem bzw. den Partikelabscheide- und -oxidationsmodul(en) (5) durch eine Kombination aus Thermophorese, Konvektion und Diffusion abscheidbar sind.

25. Abgasstrang nach den Ansprüchen 21 und 24, **dadurch gekennzeichnet, dass** im Fall der thermophoresischen Partikelabscheidung die intern des bzw. der Partikelabscheide- und -oxidationsmodule(s) (5) thermophoresisch wirksamen Oberflächen durch ein gasförmiges oder flüssiges Kühlmittel kühlbar sind.

26. Abgasstrang nach Anspruch 25, **dadurch gekennzeichnet, dass** die kühlbaren Oberflächen an gekühlten Platten eines Plattenwärmetauschers oder gekühlten Rohren eines Rohrbündelwärmetauschers gegeben sind.

27. Abgasstrang nach Anspruch 25, **dadurch gekennzeichnet, dass** die kühlbaren Oberflächen an der Struktur eines metallischen Katalysatorträgers gegeben sind.

28. Abgasstrang nach einem der Ansprüche 25 bis 27, **dadurch gekennzeichnet, dass** in die Abgasleitung (1) kurz vor dem Hauptschalldämpfer (3) oder in dessen Einströmkammer (10) eine wässrige Lösung eindüsbar ist, die durch Verdunstung eine Abkühlung der Oberflächen mit Erhöhung der thermophoresischen Wirkung erbringt.

29. Abgasstrang nach einem der Ansprüche 21 bis 28, **dadurch gekennzeichnet, dass** die Oberfläche der Struktur innerhalb des bzw. der Partikelabscheide- und -oxidationsmodule(s) (5) verrippt, vemoppt, gewellt oder durch sonstige Mittel vergrößert ist.

30. Abgasstrang nach einem der Ansprüche 21 bis 28, **dadurch gekennzeichnet, dass** die Struktur innerhalb des bzw. der Partikelabscheide- und -oxidationsmodule(s) (5) derart ausgebildet ist, dass sich die Richtung der Abgasströmung ständig ändert, z. B. einem Zick-Zack-Kurs folgt.

31. Abgasstrang nach einem der Ansprüche 21 bis 28, **dadurch gekennzeichnet, dass** intern des bzw. der Partikelabscheide- und -oxidationsmodule(s) (5) Strömungskanäle mit solcher Formgebung und speziellen Leitvorrichtungen gegeben sind, dass die Abgasströmung in Rotation versetzbar ist.

## Claims

1. Exhaust-system branch of an internal combustion engine, particularly a diesel engine in a commercial vehicle, eg a truck or bus/coach, with integrated exhaust-gas aftertreatment and sound-attenuation devices, **characterised by** the following features:
• a pre-silencer (2) and a main silencer (3) in the exhaust pipe (1)
• a device for separating and oxidising micro-particulates from the exhaust gas, consisting of at least one oxidising catalytic converter (4) significantly increasing the NO₂ content of the oxides of nitrogen in the exhaust gas and, downstream of said oxidising catalytic converter (4), of at least one filterless particulate separator and oxidiser (5),
• the exterior of the main silencer (3) is limited by a front end wall (6), a rear end wall (7) and a circumferential wall (8) and the interior of said main silencer (3) is subdivided into an inlet chamber (10) and an outlet chamber (11) by a wall (9),
• the at least one particulate separator and oxidiser (5) is installed in the main silencer (3) in such a way that its one end communicates with the inlet chamber (10) and its other end with the outlet chamber (11),
• the main silencer (3) is designed without end pipe and has one or several correspondingly designed outlet orifices (15) provided for the direct end-pipe-less discharge of cleaned exhaust gas from the outlet chamber (11) into the atmosphere and arranged on its end wall (7) facing the outlet and/or in the end area of its circumferential outer wall (8), which end area faces the exhaust-gas outlet, or in an area (14) of its end wall (6), which area (14) faces the exhaust-gas inlet and is provided for the discharge of exhaust gases,
• the main silencer (3) is designed to provide a partial attenuation volume and the partial attenuation volume missing from the main silencer (3) is realised in the pre-silencer (2) installed in the exhaust pipe (1) at a distance relative to the main silencer (3) and as close to the engine as possible,
• the at least one oxidising catalytic converter (4) is installed either in the pre-silencer (2) or in the exhaust pipe (1) upstream or downstream of said pre-silencer (2).

2. Exhaust-system branch according to Claim 1, **characterised in that** the housing (12) of the or each particulate separator and oxidiser module(s) (5) installed in the interior of the main silencer (3) is arranged parallel to the longitudinal axis of the main silencer (3), is, in a gas-tight manner, attached to an intermediate wall (9) sealing the inlet chamber (10) off from the outlet chamber (11) and, if fitted, to a non-gas-tight holding wall (13) which is parallel to said intermediate wall (9) so that on the side facing the inlet and outlet a larger distance to each adjacent end wall (6, 7) is provided.

3. Exhaust-system branch according to Claim 1, **characterised in that** on the main silencer (3) a flow guide element (34) imparting a certain direction or change of direction to the exhaust gas flowing out of the outlet chamber (11) is allocated to each outlet orifice (15) or to a group of outlet orifices (15).

4. Exhaust-system branch according to Claim 3, **characterised in that** each flow guide element (34) on the main silencer (3) is designed so that a defined pressure relaxation can be imparted to the exhaust gases flowing through or past it.

5. Exhaust-system branch according to the Claims 3 and 4, **characterised in that** on the main silencer (3) a flow guide element (34) designed as a scoop is allocated to each outlet orifice (15).

6. Exhaust-system branch according to Claim 5, **characterised in that** scoop(s) (34) are manufactured singly and attached to the outside of the end wall (6, 7) of the main silencer (3), said end wall (6, 7) being provided with the outlet orifices (15).

7. Exhaust-system branch according to the Claims 5 and 6, **characterised in that** one scoop (34) consists of a pipe elbow segment whose deflection angle - depending on the degree of the required downward deflection of the exhaust gas - is between approximately 30° and 90° degrees.

8. Exhaust-system branch according to Claim 7, **characterised in that** at least one guide wall is installed in a scoop (34) and preferably extends parallel to the deflection line.

9. Exhaust-system branch according to the Claims 5 and 6, **characterised in that** the scoop (34) is provided with an exhaust-gas guide wall (34/1) which points towards the rear at an oblique downward angle and blends into the lateral limiting walls (34/2, 34/3).

10. Exhaust-system branch according to Claim 5, **characterised in that** the outlet orifices (15), the associated scoops (34) and the respective end wall (6 and 7) of the main silencer (3) are manufactured as single pieces in a punching and pressing process.

11. Exhaust-system branch according to one of the Claims 3 and 4, **characterised in that** a larger number of outlet orifices (15) is arranged only in a certain area (14) of an end wall (6 and 7) of the main silencer (3), eg only in the upper or only in the lower half of said end wall, and that a common flow guide element (34) designed as a scoop is allocated to these outlet orifices (15).

12. Exhaust-system branch according to one of the Claims 3 to 11, **characterised in that** the/each scoop (34) on the main silencer (3) forms a diffuser with a funnel-type expansion in the direction of the outlet.

13. Exhaust-system branch according to Claim 1, **characterised in that** if the outlet orifice(s) (15) is/are provided in the circumferential wall (8) of the main silencer (3) a flow guide element (34) designed as a scoop is allocated to said outlet orifice(s) (15) or to each of said outlet orifice(s) (15) or a common flow guide element (34) designed as a scoop is allocated to said outlet orifice(s) (15), extends from the one end wall (6 or 7) in the direction of the other end wall (7 or 6) and overlaps either partial areas of the circumferential outer wall (8) or the entire circumferential wall (8) of the main silencer (3).

14. Exhaust-system branch according to Claim 11, **characterised in that** if the outlet orifices (15) are provided in a partial area (14) of the end wall (6) of the main silencer (3), which end wall (6) faces the exhaust-gas inlet, the outlet chamber (11) is sealed off from the inlet chamber (10) by means of one or several longitudinal intermediate walls (35) and, with the partial chamber (11/2) thus limited, extends to the outlet orifice(s) (15) in the end wall (6).

15. Exhaust-system branch according to Claim 1, **characterised in that** in the pre-silencer (2) several oxidising catalytic converters (4) with their housings (24) are installed parallel to the longitudinal axis of the pre-silencer (2) and to one another in such a way that a certain distance relative to the adjacent end wall (16, 17) of the pre-silencer (2) is ensured at the inlet and outlet ends.

16. Exhaust-system branch according to Claim 1, **characterised in that** several oxidising catalytic converters (4) with their housings (24) are installed in an exhaust-gas pipe segment (1/2), their longitudinal axes forming an acute angle with the longitudinal axis of the exhaust-gas pipe segment (1/2), exhaust gases being able to flow through said oxidising catalytic converters (4) in a direction parallel to the longitudinal axis of said oxidising catalytic converters (4) and said exhaust-gas pipe segment (1/2) being internally subdivided into an inlet chamber (30) and an outlet chamber (3) by means of a gas-tight intermediate wall (29).

17. Exhaust-system branch according to Claim 15, **characterised in that** the outside of the pre-silencer (2) is limited by an end wall (16) facing the exhaust-gas inlet, an end wall (17) facing the exhaust-gas outlet and a circumferential wall (18) and that the interior of the pre-silencer (2) is divided into an inlet chamber (20) and an outlet chamber (21) by a gas-tight intermediate wall (19), whereby a pipe neck (22) is connected to the end wall (16) and opens into the inlet chamber (20), to which pipe neck (22) is connected either an exhaust-gas collector pipe or an exhaust manifold connected to said collector pipe or an outlet neck of an exhaust-gas turbine of a turbocharger or an exhaust-gas pipe piece connected to said exhaust-gas turbine and whereby the oxidising catalytic converters (4) are supported in a stable position in the pre-silencer interior by means of the intermediate wall (19) and, if fitted, by another, non-gas-tight supporting wall (25), and whereby a pipe neck (23) or an exhaust-gas pipe piece (1/1) leads away from the end wall limiting the outlet chamber (21) and extends towards the main silencer (3).

18. Exhaust-system branch according to Claim 1, **characterised in that** the interior of the pre-silencer (2) is at least partially clad with sound-absorbing material (36) at least in the area of the outlet chamber (21).

19. Exhaust-system branch according to Claim 1, **characterised in that** the interior of the main silencer (3) is at least partially clad with sound-absorbing material (36) at least in the area of the outlet chamber (11).

20. Exhaust-system branch according to Claim 1, **characterised in that** the sound attenuation measures in the end-pipe-less main silencer (3) and the sound attenuation measures in the pre-silencer (2) add up to an overall sound attenuation effect which complies with the statutory sound emission values.

21. Exhaust-system branch according to one of the Claims 1 and 2, **characterised in that** the micro-particulates contained in the exhaust gas can be separated in the particulate separator and oxidiser module(s) (5) by means of thermophoresis on cooled surfaces.

22. Exhaust-system branch according to one of the Claims 1 and 2, **characterised in that** the micro-particulates contained in the exhaust gas can be separated in the particulate separator and oxidiser module(s) (5) by means of convection on structured surfaces and/or repeated deflection of the flow of the exhaust gases.

23. Exhaust-system branch according to one of the Claims 1 and 2, **characterised in that** the micro-particulates contained in the exhaust gas can be separated in the particulate separator and oxidiser module(s) (5) by means of diffusion in the flow dead zones and/or in narrow flow channels, the smallest free cross-section of the flow channels being between 25 µm² and 250 µm².

24. Exhaust-system branch according to one of the Claims 21 to 23, **characterised in that** the micro-particulates contained in the exhaust gas can be separated in the particulate separator and oxidiser module(s) (5) by means of a combination of thermophoresis, convection and diffusion.

25. Exhaust-system branch according to one of the Claims 21 to 24, **characterised in that** in thermophoretic particulate separation the surfaces arranged on the inside of the particulate separator and oxidiser module(s) (5) and acting thermophoretically can be cooled by means of a gaseous or liquid cooling agent.

26. Exhaust-system branch according to Claim 25, **characterised in that** the surfaces that can be cooled are provided on cooled plates of a plate-type heat exchanger or on cooled pipes of a pipe-cluster heat exchanger.

27. Exhaust-system branch according to Claim 25, **characterised in that** the surfaces that can be cooled are provided on the structure of a metallic carrier for the catalytic converter.

28. Exhaust-system branch according to one of the Claims 25 to 27, **characterised in that** a watery solution can be sprayed into the exhaust-gas pipe (1) at a point arranged just before the main silencer (3) or into its inlet chamber (10) and cools the surfaces through evaporation, achieving an increase in the thermophoretic effect.

29. Exhaust-system branch according to one of the Claims 21 to 28, **characterised in that** the surface of the structure within the particulate separator and oxidiser module(s) (5) is ribbed, nopped, corrugated or enlarged by other means.

30. Exhaust-system branch according to one of the Claims 21 to 28, **characterised in that** the structure within the particulate separator and oxidiser module(s) (5) is designed in such a way that the flow direction of the exhaust gases changes constantly, eg it follows a zig-zag course.

31. Exhaust-system branch according to one of the Claims 21 to 28, **characterised in that** within the particulate separator and oxidiser module(s) (5) flow channels are designed with special deflection devices and shaped so that the flow of exhaust gases can be set in rotation.

## Revendications

1. Ligne d'échappement d'un moteur à combustion, en particulier moteur diesel d'un véhicule industriel tel qu'un camion ou bien un autobus/autocar, avec dispositif de traitement postérieur des gaz d'échappement et silencieux, **caractérisée par** les données suivantes :
- Un silencieux en amont (2) et un silencieux principal (3) dans la conduite d'échappement (1)
- Un dispositif de séparation et d'oxydation des particules fines des gaz d'échappement, composé au moins d'un catalyseur à oxydation (4) augmentant significativement la part des NO₂ de l'oxyde d'azote dans les gaz d'échappement et, en amont de celui-ci, au moins d'un dispositif de séparation et d'oxydation de particules sans filtre (5).
- Le silencieux principal (5) est délimité à l'extérieur par une paroi frontale à l'avant (6), un paroi frontale à l'arrière (7) et une paroi circonférentielle (8) ainsi qu'à l'intérieur divisé par une paroi (9) en une chambre d'admission (10) et une chambre d'échappement (11),
- Au moins un dispositif de séparation et d'oxydation de particules (5) est intégré dans le silencieux principal (3) et communique à cet emplacement avec la chambre d'admission (10) à une extrémité et avec la chambre d'échappement (11) à l'autre extrémité,
- Le silencieux principal (3) ne possède pas de section terminale et présente au niveau de la paroi frontale du côté de la sortie des gaz d'échappement (7) et/ou au niveau de la zone terminale côté sortie des gaz d'échappement de sa paroi circonférentielle extérieure (8) ou bien au niveau de la zone prévue pour l'évacuation des gaz d'échappement de sa paroi frontale côté admission des gaz d'échappement (6) une ou plusieurs ouvertures d'échappement (15) formées en conséquence pour une évacuation directe sans section terminale des gaz d'échappement filtrés hors de la chambre d'échappement (11) dans l'atmosphère,
- Le silencieux principal (3) est dimensionné sur un volume partiel de réduction des nuisances sonores et le volume de réduction des nuisances sonores manquant dans le silencieux principal (3) est réalisé dans le silencieux en amont (2), lequel est intégré le plus près possible du moteur dans la conduite d'échappement (1) à une certaine distance du silencieux principal (3),
- Au moins un catalyseur à oxydation (4) est placé soit dans le silencieux en amont (2) soit avant ou après celui-ci dans la conduite d'échappement (1)

2. Ligne d'échappement selon la revendication 1, **caractérisée par le fait que** le ou chacun des module(s) de séparation et d'oxydation des particules (5) intégré(s) à l'intérieur du silencieux principal (3) est fixé avec son carter (12) de manière étanche au gaz, passant parallèlement à l'axe par rapport à l'axe médian longitudinal du silencieux principal (3) dans une paroi intermédiaire (9) cloisonnant la chambre d'admission (10) de la chambre d'échappement (11) et, le cas échéant, dans une paroi de support (13) parallèle à celle-ci et non étanche au gaz de telle manière qu'il y ait, côté admission et échappement, un espace plus important par rapport à chaque paroi frontale (6, 7) voisine.

3. Ligne d'échappement selon la revendication 1, **caractérisée par le fait qu'**à chaque ouverture d'échappement (15) ou à un groupe d'ouvertures d'échappement (15) sur le silencieux principal (3) est attribué un élément de guidage de flux (34) imposant aux gaz d'échappement sortant de la chambre d'échappement (11) une certaine direction ou une modification de la direction.

4. Ligne d'échappement selon la revendication 3, **caractérisée par le fait que**, sur le silencieux principal (3), chaque élément de guidage de flux (34) est constitué également selon **le fait qu'**une décompression définie peut être imposée aux gaz d'échappement traversant ou passant à côté.

5. Ligne d'échappement selon les revendications 3 et 4, **caractérisée par le fait que**, sur le silencieux principal (3), un élément de guidage de flux (34) ayant la forme d'un d'auvent est attribué à chaque ouverture d'échappement (15).

6. Ligne d'échappement selon la revendication 5, **caractérisée par le fait que** le(s) auvent(s) d'échappement (34) est/sont fabriqué(s) séparément et fixé(s) ensuite à l'extérieur à la paroi frontale (6, 7) du silencieux principal (3) présentant les ouvertures d'échappement (15).

7. Ligne d'échappement selon une des revendications 5 et 6, **caractérisé par le fait qu'**un auvent est formé d'un segment de coude tubulaire dont l'angle de déviation est compris entre env. 30° et 90° en fonction du degré de la déviation souhaitée des gaz d'échappement vers le sol.

8. Ligne d'échappement selon la revendication 7, **caractérisée par le fait que**, dans un auvent d'échappement, au minimum une paroi de guidage est montée, laquelle s'étend de préférence parallèlement à la ligne de déviation.

9. Ligne d'échappement selon une des revendications 5 et 6, **caractérisée par le fait que** l'auvent d'échappement (34) présente une paroi de guidage des gaz d'échappement (34/1) inclinée vers l'arrière et vers le bas et qui se dissocie en parois latérales de délimitation (34/2, 34/3).

10. Ligne d'échappement selon la revendication 5, **caractérisée par le fait que** les ouvertures d'échappement (15) et les auvents d'échappement (34) attribués sont fabriqués d'une seule pièce avec la paroi frontale concernée (6 ou 7) du silencieux principal (3) par matriçage et frappe.

11. Ligne d'échappement selon une des revendications 3 et 4, **caractérisée par le fait qu'**un nombre plus important d'ouvertures d'échappement (15) est réalisé seulement dans une zone déterminée (14) d'une paroi frontale (6 ou 7) du silencieux principal (3), par exemple uniquement dans la moitié supérieure ou inférieure de celui-ci, et qu'un élément de guidage de flux (34) commun ayant la forme d'un auvent est attribué à ces ouvertures d'échappement (15).

12. Ligne d'échappement selon une des revendications 3 à 11, **caractérisée par le fait que** le ou chaque auvent d'échappement (34) sur le silencieux principal (3) forme un diffuseur s'étendant dans la direction de l'échappement tel un entonnoir.

13. Ligne d'échappement selon la revendication 1, **caractérisé par le fait qu'**ensuite lorsqu'une/des ouverture(s) d'échappement (15) est/sont réalisée(s) dans la paroi circonférentielle (8) du silencieux principal (3), un élément de guidage de flux (34) ou chaque élément ou un élément commun ayant la forme d'un auvent est attribué à cette/ces ouverture(s) d'échappement (15) et cet élément s'étend d'une paroi frontale (6 ou 7) à ou en direction de l'autre paroi frontale (7 ou 6) et recouvre soit les zones partielles de la paroi circonférentielle extérieure (8) ou l'ensemble de la paroi circonférentielle (8) du silencieux principal (3).

14. Ligne d'échappement selon la revendication 11, **caractérisée par le fait que** la chambre d'échappement (11), dans le cas où une/des ouverture(s) d'échappement est/sont réalisée(s) dans une zone partielle (14) de la paroi frontale (6) côté admission des gaz d'échappement du silencieux principal (3), est cloisonnée par une ou plusieurs parois intermédiaires longitudinales (35) par rapport à la chambre d'admission (10) et s'étend avec la chambre partielle (11/2) délimitée de cette manière jusqu'à la/les ouverture(s) d'échappement (15) réalisée(s) dans la paroi frontale.

15. Ligne d'échappement selon la revendication 1, **caractérisée par le fait que**, dans le silencieux en amont (2), plusieurs catalyseurs à oxydation (4) avec leur carter (24) sont montés parallèlement à l'axe par rapport à l'axe longitudinal de celui-ci et l'un par rapport à l'autre de telle manière qu'il existe un espace déterminé côté admission et échappement par rapport à la paroi frontale voisine respective (16, 17) du silencieux en amont (2).

16. Ligne d'échappement selon la revendication 1, **caractérisée par le fait que** plusieurs catalyseurs à oxydation (4) avec leur carter sont montés dans une partie de la conduite d'échappement (1/2) parallèlement à l'axe de manière à pouvoir être traversé, et plus précisément par leurs axes longitudinaux à un angle aigu par rapport à l'axe longitudinal de la partie de la conduite d'échappement (1/2), auquel cas celle-ci est divisée à l'intérieur par une paroi intermédiaire (29) étanche aux gaz en une chambre d'admission (30) et une chambre d'échappement (3).

17. Ligne d'échappement selon la revendication 15, **caractérisée par le fait que** le silencieux en amont (2) est délimité à l'extérieur par une paroi frontale (16) côté admission des gaz d'échappement, une paroi frontale (17) côté évacuation des gaz d'échappement et une paroi circonférentielle (18) et que l'intérieur du silencieux en amont (2) est divisé par une paroi intermédiaire (19) étanche aux gaz en une chambre d'admission (20) et une chambre d'échappement (21), auquel cas une tubulure (22) raccordée à la paroi frontale (16) débouche dans la chambre d'admission (20) et à cette tubulure est raccordé soit une conduite collectrice des gaz d'échappement, soit un collecteur d'échappement raccordé à celle-ci, soit la tubulure d'échappement d'une turbine à gaz d'échappement d'un turbocompresseur à gaz d'échappement, soit une partie de la conduite d'échappement raccordé à cette dernière et auquel cas les catalyseurs à oxydation (4) sont fixés de manière stable à l'intérieur du silencieux en amont par la paroi intermédiaire (19) et, le cas échéant, par une paroi de soutien (27) supplémentaire non étanche aux gaz, et auquel cas une tubulure (23) ou une partie de la conduite d'échappement (1/1) conduisant au silencieux principal (3) sort de la paroi frontale (17) délimitant la chambre d'échappement (21).

18. Ligne d'échappement selon la revendication 1, **caractérisée par le fait que** le silencieux en amont (2) est recouvert à l'intérieur au minimum au niveau de la sa chambre d'échappement (21) par au moins partiellement d'un matériau insonorisant (36).

19. Ligne d'échappement selon la revendication1, **caractérisée par le fait que** le silencieux principal (3) est recouvert à l'intérieur d'au moins partiellement d'un matériau (36) insonorisant au minimum au niveau de sa chambre d'échappement (21).

20. Ligne d'échappement selon la revendication 1, **caractérisée par le fait que** les mesures de réduction des nuisances dans le silencieux principal (3) sans section terminal additionnées aux mesures de réduction des nuisances sonores dans le silencieux en amont (2) provoquent un effet de réduction totale des nuisances sonores qui satisfait aux valeurs légales d'émissions sonores.

21. Ligne d'échappement selon une des revendications 1 et 2, **caractérisée par le fait que** les particules fines contenues dans les gaz d'échappement peuvent être séparées au niveau de surfaces refroidies dans le ou les module(s) de séparation et d'oxydation des particules (5) par thermophorèse.

22. Ligne d'échappement selon une des revendications 1 et 2, **caractérisée par le fait que** les particules fines contenues dans les gaz d'échappement peuvent être séparées par convection sur des surfaces structurées et/ou du fait d'une déviation répétée des gaz d'échappement dans le ou les module(s) de séparation et d'oxydation des particules (5).

23. Ligne d'échappement selon une des revendications 1 et 2, **caractérisée par le fait que** les particules fines contenues dans les gaz d'échappement peuvent être séparées par diffusion dans des zones neutres d'écoulement et/ou dans des conduits d'écoulement étroits dans le ou les module(s) de séparation et d'oxydation des particules (5), auquel cas le plus petite section libre des conduits d'écoulement est comprise entre 25 µm² et 250 µm².

24. Ligne d'échappement selon les revendications 21 à 23, **caractérisée par le fait que** les particules fines contenues dans les gaz d'échappement peuvent être séparées par une combinaison de la thermophorèse, de la convection et de la diffusion dans le ou les module(s) de séparation et d'oxydation des particules (5).

25. Ligne d'échappement selon les revendications 21 et 24, **caractérisée par le fait que**, dans le cas de la séparation des particules par thermophorèse, les surfaces agissant par thermophorèse à l'intérieur du ou des module(s) de séparation et d'oxydation des particules (5) peuvent être refroidies par un liquide de refroidissement gazeux ou liquide.

26. Ligne d'échappement selon la revendication 25, **caractérisée par le fait que** les surfaces refroidissables sont mises en contact avec des plaques refroidies d'un échangeur thermique à plaques ou avec des conduites refroidies d'un échangeur thermique à faisceau de conduites.

27. Ligne d'échappement selon la revendication 25, **caractérisée par le fait que** les surfaces refroidissables sont mises en contact avec la structure d'un porte-catalyseur métallique.

28. Ligne d'échappement selon une des revendications 25 à 27, **caractérisée par le fait qu'**une solution à base d'eau peut être injectée dans la conduite d'échappement (1) juste en amont du silencieux principal (3) ou dans sa chambre d'admission (10) et cette solution fournit par évaporation un refroidissement des surfaces par l'augmentation de l'effet de thermophorèse.

29. Ligne d'échappement selon une des revendications 21 à 28, **caractérisée par le fait que** la surface de la structure est nervurée, pastillée, ondulée ou agrandie par un autre moyen à l'intérieur du ou des module(s) de séparation et d'oxydation des particules (5).

30. Ligne d'échappement selon une des revendications 21 à 28, **caractérisée par le fait que** la structure à l'intérieur du ou des module(s) de séparation et d'oxydation des particules (5) est formée de telle manière que la direction de l'écoulement des gaz d'échappement change en permanence, par exemple zigzague.

31. Ligne d'échappement selon une des revendications 21 à 28, **caractérisée par le fait qu'**il existe à l'intérieur du ou des module(s) de séparation et d'oxydation des particules (5) des conduits d'écoulement d'une telle forme et de tels dispositifs de guidage que le flux des gaz d'échappement peut être transformé en rotation.
